# EUROPÄISCHE PATENTSCHRIFT

(11) **EP 3 931 063 B1**
(45) Veröffentlichungstag und Bekanntmachung des Hinweises auf die Patenterteilung: **21.08.2024**
(21) Anmeldenummer: 20712213.6
(22) Anmeldetag: 28.02.2020
(51) Int. Cl.: B61L 1/16, B61L 29/22, G01L 1/24, G01B 11/00, B61L 25/02, G01B 7/00, G01B 11/16

(54) **EINRICHTUNG UND VERFAHREN ZUM DETEKTIEREN EINES SICH ENTLANG EINER FAHRSCHIENE BEWEGENDEN RADES**
DEVICE AND METHOD FOR DETECTING A WHEEL MOVING ALONG A RAIL TRACK
DISPOSITIF ET PROCÉDÉ POUR DÉTECTER UNE ROUE QUI SE DÉPLACE LE LONG D'UN RAIL

(30) Priorität: 28.03.2019 DE 102019204331
(43) Veröffentlichungstag der Anmeldung: 05.01.2022
(73) Patentinhaber: Siemens Mobility GmbH, 81739 München (DE)
(72) Erfinder: DELMAS, Remy, 10439 Berlin (DE)
(74) Vertreter: Siemens Patent Attorneys
(86) Internationale Anmeldenummer: PCT/EP2020/055225
(87) Internationale Veröffentlichungsnummer: WO 2020/193059

(56) Entgegenhaltungen:
- EP-A1- 1 899 209
- EP-A1- 3 069 952
- EP-A1- 3 139 134
- EP-A1- 3 376 196

## Beschreibung

Gleisfreimeldeeirichtungen mit unterschiedlichen Verfahren zum Detektieren eines sich entlang einer Fahrschiene bewegenden Rades sind im Eisenbahnverkehr seit vielen Jahren bekannt. Beispielsweise werden hierfür sogenannte Achszähler oder Gleichstromkreise eingesetzt, die ein auf der Fahrschiene vorbeibewegendes Rad detektieren und an eine Kontrolleinrichtung melden. Darüber hinaus wurden in den letzten Jahren auch Gleisfreimeldeeinrichtungen bekannt, die einen vorbeifahrenden Zug mittels Fiber Sensing (auch Fiber Optic Sensing genannt) ermitteln. Hierbei wird eine Veränderung eines Lichtsignals in einem Lichtwellenleiter durch den vorbeifahrenden Zug erkannt und an die Kontrolleinrichtung übermittelt.

Aus der EP 1 899 209 Al ist ein Radsensor, der EP 3 139 134 Al eine Positionserfassung, der EP 3 069 952 Al ein Achszählverfahren und aus der EP 3 376 196 Al ein Schienenmesssystem bekannt.

Aufgabe der vorliegenden Erfindung ist es, eine alternative Einrichtung und Verfahren zum Detektieren eines sich entlang einer Fahrschiene bewegenden Rades bereitzustellen.

Die Aufgabe wird erfindungsgemäß gelöst durch eine Einrichtung zum Detektieren eines sich entlang einer Fahrschiene bewegenden Rades, mit wenigstens einem Permanentmagneten, der so im Bereich der Fahrschiene anbringbar ist, dass sich der Permanentmagnet durch die Vorbeibewegung des Rades mechanisch verformt und mit wenigstens einer Sensoreinrichtung, die zum Ermitteln der mechanischen Verformung des Permanentmagneten ausgebildet ist.

Die Aufgabe wird weiterhin gelöst durch ein Verfahren zum Detektieren eines sich entlang einer Fahrschiene bewegenden Rades, bei dem eine durch die Vorbeibewegung des Rades hervorgerufene mechanische Verformung wenigstens eines im Bereich der Fahrschiene angebrachten Permanentmagneten ermittelt wird.

Die erfindungsgemäße Lösung hat den Vorteil, dass mit der mechanischen Veränderung des Permanentmagneten ein physikalischer Effekt ausgenutzt wird, der relativ störungsunempfindlich ist. Bei der erfindungsgemäßen Lösung wird ein Permanentmagnet oder Dauermagnet so im Bereich der Fahrschiene angebracht, dass der Permanentmagnet durch die Vorbeibewegung des Rades des Schienenfahrzeugs mechanisch verändert wird. Das Rad des Schienenfahrzeugs besteht aus einem magnetisierbaren Metall, beispielsweise Stahl, und tritt beim Vorbeifahren in das Magnetfeld des Permanentmagneten ein. Dadurch entsteht eine Wechselwirkung, weil das magnetische Feld des Permanentmagneten Kräfte auf das im Magnetfeld befindliche Rad ausübt. Diese Kräfte bewirken eine mechanische Verformung des Permanentmagneten. Diese Verformung wird erfindungsgemäß durch die Sensoreinrichtung erfasst. Dabei ist die Sensoreinrichtung so mit dem Permanentmagneten verbunden bzw. in dessen Nähe angeordnet, dass die mechanische Veränderung des Permanentmagneten ermittelt werden kann. Die zu erfassende Verformung des Permanentmagneten liegt dabei beispielsweise im Bereich von etwa 10 bis 100 µm. Die Sensoreinrichtung kann hierbei die mechanische Veränderung des Permanentmagneten auf unterschiedliche Weise ermitteln, wie beispielsweise optisch, mechanisch oder elektrisch. Die Sensoreinrichtung kann beispielsweise einen optischen Sensor, wie z.B. ein Faser-Bragg-Gitter, oder einen elektrisch-mechanischen Sensor, wie einem Dehnungsmessstreifens, aufweisen, wie im Folgenden noch genauer beschrieben ist.

Als optischer Sensor könnte beispielsweise ein Faser-Bragg-Gitter dienen, welches die mechanische Verformung des Permanentmagneten durch das vorbeifahrende Rad registriert. Ein Dehnungsmessstreifen, der beispielsweise auf den Permanentmagneten aufgeklebt ist, kann ebenfalls die mechanische Verformung des Permanentmagneten registrieren und in ein elektrisches Signal umwandeln.

Die erfindungsgemäße Lösung kann durch vorteilhafte Ausgestaltung weiterentwickelt werden, die im Folgenden beschrieben sind.

So kann die Sensoreinrichtung wenigstens einen Bragg-Spiegel oder wenigstens ein Faser-Bragg-Gitter umfassen. Dies hat den Vorteil, dass ein Bragg-Spiegel oder Faser-Bragg-Gitter keine Stromversorgung benötigt und somit keine elektrische Energie zur Sensoreinrichtung geliefert werden muss. Hieraus ergeben sich weitere Vorteile, weil beispielsweise keine Kupferleitungen streckenseitig installiert werden müssen, die kostenintensiv sind. Die Sensoreinrichtung mit dem Bragg-Spiegel wird so mit dem Permanentmagneten verbunden, dass auch der Bragg-Spiegel mechanisch verändert wird. Durch diese mechanische Veränderung des Bragg-Spiegels ändert sich die Reflexionsfrequenz, bei der Licht reflektiert wird. Diese Änderung kann wiederum spektrometrisch ausgewertet werden.

Weiterhin kann die Sensoreinrichtung wenigstens ein zur Leitung von Licht geeignetes Faserelement umfassen, das mit dem Bragg-Spiegel oder Faser-Bragg-Gitter verbunden ist. Solche Faserelemente, die beispielsweise auch als Lichtwellenleiter bezeichnet werden, sind kostengünstig verfügbar, leicht zu installieren und übermitteln Signale zuverlässig auch über weite Distanzen an eine Kontrolleinrichtung.

Als Bragg Spiegel wird hier ein effizienter Reflektor verstanden, der in Lichtleitern eingesetzt wird (Distributed Bragg Reflector). Der in einem Faserelement bzw. Lichtwellenleiter integrierte Bragg-Spiegel wird als Faser-Bragg-Gitter bezeichnet. Es wird im Folgenden kein Unterschied zwischen Bragg Spiegel und Faser-Bragg-Gitter gemacht.

Um eine möglichst gute Übertragung der mechanischen Veränderung des Permanentmagneten auf die Sensoreinrichtung zu erreichen, kann die Sensoreinrichtung mit dem Permanentmagneten stoffschlüssig verbunden sein. Insbesondere kann die Sensoreinrichtung und hier insbesondere das Faser-Bragg-Gitter oder der Bragg-Spiegel auf den Permanentmagneten geklebt werden. Insbesondere von Vorteil ist hier ein dauerelastischer Klebstoff, der die mechanische Verformung des Permanentmagneten durch das sich vorbeibewegende Rad nicht behindert. Faser-Bragg-Gitter und Permanentmagnet können alternativ auch in Kunstharz gegossen sein.

In einer vorteilhaften Ausgestaltung kann der Permanentmagnet eine durch das vorbeifahrende Rad bedingte Dilatation aufweisen, die größer als eine Messunsicherheit der Sensoreinrichtung ist. Dies hat den Vorteil, dass das vorbeifahrende Rad eine ausreichende Dilatation, also eine ausreichende Ausdehnung, durch die Magnetkraft aufweist, die von der Sensoreinrichtung sicher erkannt werden kann. Die Dilatation kann eine Stauchung oder eine Dehnung bedeuten.

Um den Einfluss des vorbeifahrenden Rades möglichst gut erfassen zu können, kann die Sensoreinrichtung relativ zum Permanentmagneten anhand der magnetischen Polarisationsachse des Permanentmagneten ausgerichtet sein. Beispielsweise bei dem Bragg-Spiegel ist eine Ausrichtung von ±45° von der Längsrichtung des Bragg-Spiegels zu der Polarisationsachse des Permanentmagneten von Vorteil. Um beispielsweise eine Stauchung des Permanentmagneten zuverlässig zu registrieren, muss ein Bragg-Spiegel oder auch ein Dehnungsmessstreifen richtig ausgerichtet angebracht sein.

Um die Verformung des Permanentmagneten durch einen Bragg-Spiegel oder einen Faser-Bragg-Gitter einfach zu ermitteln, kann die Sensoreinrichtung wenigstens eine Breitbandlichtquelle aufweisen. Mittels der Breitbandlichtquelle wird Licht in das Faserelement eingespeist, das mit dem Bragg-Spiegel am Permanentmagneten verbunden ist. Die Sensoreinrichtung kann ferner wenigstens einen Tiefpassfilter aufweisen. Dies hat den Vorteil, dass durch den Tiefpassfilter Signale aus elektromagnetischen Störungen herausgefiltert werden können, die einen potentiellen Einfluss auf das Signal haben können, das vom Bragg-Spiegel bzw. Faser-Bragg-Gitter kommt.

Die Sensoreinrichtung kann zur Ausgabe oder Veränderung wenigstens eines Radsignals ausgebildet sein. Dies hat den Vorteil, dass ein von der Sensoreinrichtung ausgegebenes Radsignal in beliebiger Weise weiterverarbeitet werden kann und in gleicher Weise wie beispielsweise das Signal eines Achszählers oder Gleichstromkreises verarbeitet werden kann.

Die Erfindung betrifft weiterhin eine eisenbahntechnische Anlage mit wenigstens einer Fahrschiene und wenigstens einem Schienenfahrzeug, dessen Räder sich während der Fahrt entlang der Fahrschiene bewegen, wobei die eisenbahntechnische Anlage wenigstens eine Einrichtung zum Detektieren eines sich entlang einer Fahrschiene bewegenden Rades nach einer der zuvor genannten Ausführungsformen umfasst.

In einer vorteilhaften Ausgestaltung der eisenbahntechnischen Anlage kann die Einrichtung anhand der magnetischen Polarisationsachse des Permanentmagneten zur Fahrschiene ausgerichtet sein. Dies hat den Vorteil, dass in Abhängigkeit von der Ausrichtung des Permanentmagneten zur Fahrschiene der Einfluss des vorbeifahrenden Rades des Schienenfahrzeugs maximiert werden kann und dadurch die Vorbeifahrt des Rades möglichst gut und sicher erkannt werden kann.

In einer vorteilhaften Ausgestaltung des erfindungsgemäßen Verfahrens kann die mechanische Veränderung des Permanentmagneten mittels eines Bragg-Spiegels oder Faser-Bragg-Gitters ermittelt werden. Dies hat die oben bereits beschriebenen Vorteile, dass beispielsweise keine elektrische Energie streckenseitig benötigt wird und auch keine Kupferkabel verlegt werden müssen.

Um die Auswirkung des vorbeifahrenden Rades auf den Permanentmagneten möglichst gut erfassen zu können, kann die mechanische Veränderung des Permanentmagneten auf eine verbundene Sensoreinrichtung übertragen werden.

Um die Vorteile von Fiber Optic Sensing ausnutzen zu können, kann die mechanische Veränderung des Permanentmagneten durch eine Veränderung eines Lichtsignals in einem Faserelement registriert werden.

In einer vorteilhaften Ausgestaltung des erfindungsgemäßen Verfahrens kann durch die ermittelte Veränderung des Permanentmagneten bedingt wenigstens ein Radsignal ausgegeben oder verändert werden. Dies hat den Vorteil, dass das erkannte Rad in üblicher Weise in einer eisenbahntechnischen Anlage weiterverarbeitet werden kann.

Im Folgenden wird die Erfindung mit Bezug auf die beigefügten Zeichnungen erläutert.

Es zeigen:
- Fig. 1: eine schematische Darstellung einer beispielhaften Ausführungsform einer erfindungsgemäßen eisenbahntechnischen Anlage mit einer erfindungsgemäßen Einrichtung;
- Fig. 2: eine schematische Darstellung der beispielhaften Ausführungsform der erfindungsgemäßen Einrichtung aus Fig. 1;
- Fig. 3: eine schematische Darstellung einer weiteren beispielhaften Ausführungsform einer erfindungsgemäßen Einrichtung;
- Fig. 4: eine schematische Seitenansicht der beispielhaften Ausführungsform der erfindungsgemäßen Einrichtung aus Fig. 2;
- Fig. 5: eine schematische Darstellung der beispielhaften Ausführungsform der erfindungsgemäßen Einrichtung aus Fig. 2;
- Fig. 6: eine schematische Darstellung einer beispielhaften Ausführungsform einer erfindungsgemäßen Einrichtung an einer Fahrschiene; und
- Fig. 7: eine schematische Darstellung einer beispielhaften Anordnung einer erfindungsgemäßen Einrichtung an einer Fahrschiene.

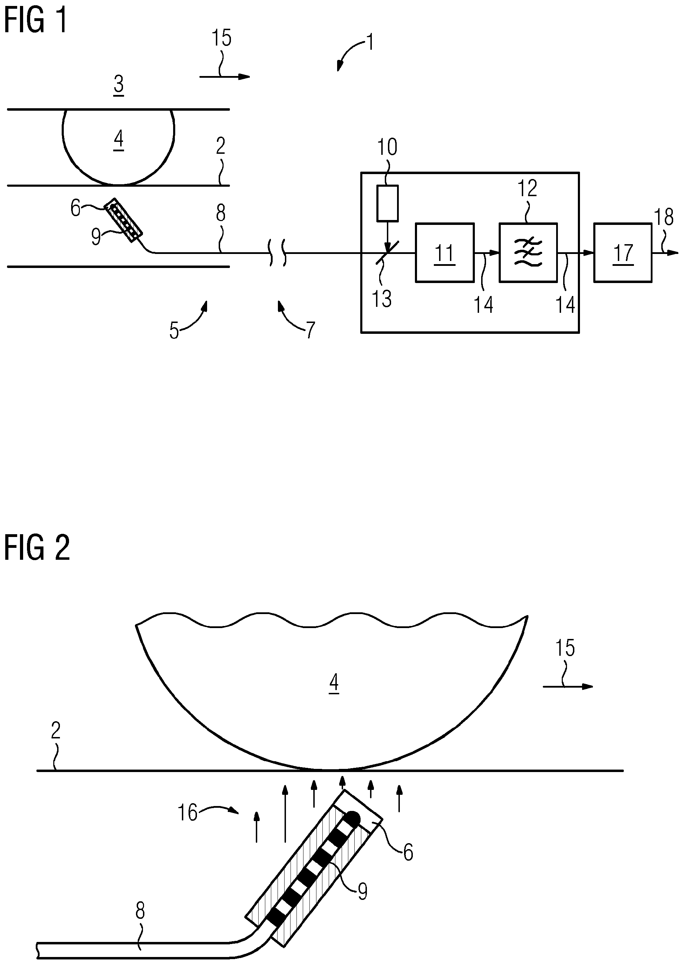

Fig. 1 zeigt eine beispielhafte Ausführungsform einer erfindungsgemäßen eisenbahntechnischen Anlage 1 mit einem aus Fahrschienen 2 gebildeten Streckennetz und mit Schienenfahrzeugen 3, die sich in dem Streckennetz bewegen. Dabei bewegen sich Räder 4 der Schienenfahrzeuge 3 in bekannter Weise entlang der Fahrschienen 2. Die eisenbahntechnische Anlage 1 umfasst weiterhin wenigstens eine Gleisfreimeldeeinrichtung, die eine Einrichtung 5 zum Detektieren eines sich entlang einer Fahrschiene 2 bewegenden Rades 4 aufweist.

Die erfindungsgemäße Einrichtung 5 in der in Fig. 1 dargestellten beispielhaften Ausführungsform umfasst einen Permanentmagneten 6 und eine Sensoreinrichtung 7. Die Sensoreinrichtung 7 umfasst wenigstens ein optisches Faserelement 8 mit einem integrierten Bragg-Spiegel 9 an einem Ende des Faserelements 8. Die Sensoreinrichtung 7 umfasst weiterhin wenigstens eine Breitbandlichtquelle 10, beispielsweise in Form eines Lasers, eine spektrometrische Auswerteeinrichtung 11 und ein Tiefpassfilter 12.

Wie z. B. in Fig. 2 erkennbar, ist der Bragg-Spiegel 9, der im Faserelement 8 integriert ist und somit als Faser-Bragg-Gitter bezeichnet werden kann, stoffschlüssig mit dem Permanentmagneten 6 verbunden. Bei der beispielhaften Ausführungsform in den Figuren 1 und 2 ist das Faser-Bragg-Gitter mittels eines dauerelastischen Klebstoffes auf den Permanentmagneten 6 aufgeklebt. Alternativ könnten das Faser-Bragg-Gitter und der Permanentmagnet 6 auch in Kunstharz gegossen sein.

Im Betrieb wird durch die Breitbandlichtquelle 10 breitbandiges Licht in das Faserelement 8 über einen halbdurchlässigen Spiegel 13 in das Faserelement 8 eingeleitet. Das Licht wird durch das Faserelement 8 bis zum Bragg-Spiegel 9 geleitet und reflektiert. Das zurückgeworfene Licht wird von der spektrometrischen Auswerteeinrichtung 11 analysiert und in ein Messsignal 14 umgewandelt, das vom Tiefpassfilter 12 gefiltert wird.

Wenn sich im Betrieb das Rad 4 des Schienenfahrzeugs 3 in einer Fahrtrichtung 15 entlang der Fahrschiene 2 oberhalb vom Permanentmagneten 6 vorbeibewegt, bewegt sich das Rad 4 durch ein Magnetfeld 16 des Permanentmagneten 6. Das Rad 4 des Schienenfahrzeugs 3 ist aus magnetisierbarem Metall, insbesondere aus Stahl, hergestellt und stellt daher einen magnetisierbaren Körper dar, der Einfluss auf ein Magnetfeld hat. Somit wird das Rad 4 vom Permanentmagneten 6 angezogen bzw. abgestoßen. Da der Permanentmagnet 6 allerdings fest zur Fahrschiene 2 angeordnet ist und somit keine größere Relativbewegung zwischen Rad 4 und Permanentmagnet 6 stattfinden kann, wird der Permanentmagnet 6 lediglich mechanisch verformt. Diese mechanische Verformung drückt sich beispielsweise durch eine Dehnung oder Stauchung des Permanentmagneten 6 aus. Der Permanentmagnet 6 könnte auch durch den Einfluss des Rades 4 gebogen werden.

Die mechanische Veränderung des Permanentmagneten 6 ist daher ein Indiz für das sich vorbeibewegende Rad 4 des Schienenfahrzeugs 3. Dieses Phänomen macht sich die Erfindung zunutze, indem die Veränderung erfasst wird. Der stoffschlüssig auf dem Permanentmagneten 6 angeordnete Bragg-Spiegel 9 wird durch die mechanische Verformung des Permanentmagneten 6 ebenfalls mechanisch verformt. Diese Verformung des Bragg-Spiegels 9 bedingt durch den gekoppelten Permanentmagneten 6 bedingt eine Veränderung des breitbandigen Lichts, das in dem Faserelement 8 zurückgeworfen wird. Daher ist die Vorbeibewegung des Rades 4 anhand einer Veränderung des Lichts in dem Faserelement 8 registrierbar.

Das Messsignal 14, das hinter dem Tiefpassfilter 12 ausgegeben wird, wird an eine weitere Auswerteeinrichtung 17 gegeben. Diese Auswerteeinrichtung 17 ermittelt, ob das Messsignal 14 für ein vorbeifahrendes Rad repräsentativ ist und gibt gegebenenfalls ein Radsignal 18 an eine nicht dargestellte Steuerungseinrichtung der eisenbahntechnischen Anlage 1 aus.

Der Permanentmagnet 6 ist bei der erfindungsgemäßen Einrichtung 5 so gewählt, dass eine sogenannte Dilatation, also eine Ausdehnung des Permanentmagneten 6 durch die magnetischen Kräfte, so groß ist, dass sie von der Sensoreinrichtung 7 sicher erkannt werden kann. Dadurch werden Fehlmessungen vermieden und ein vorbeifahrendes Rad 4 kann eindeutig erkannt werden.

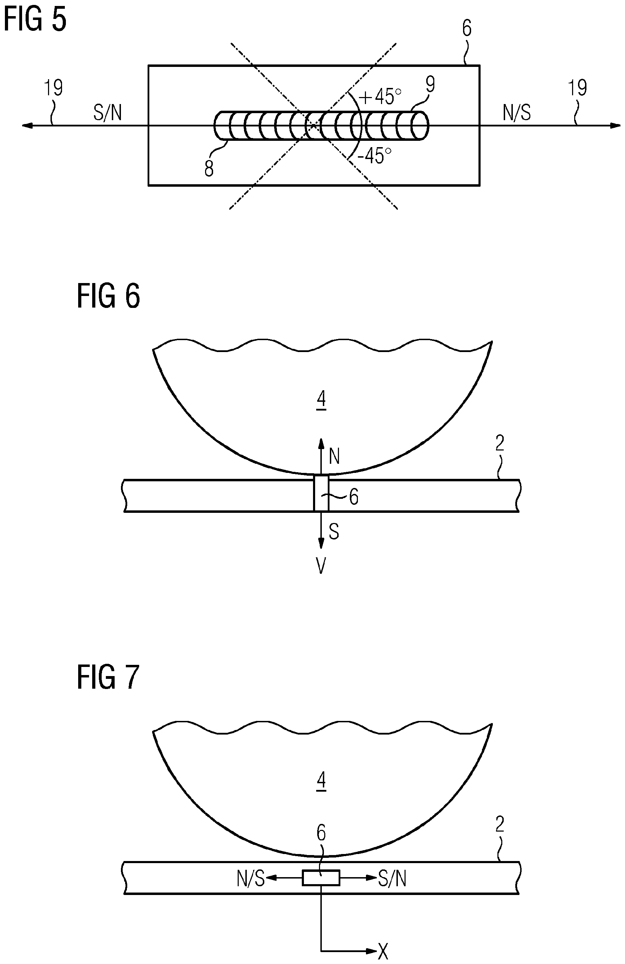

Fig. 5 zeigt den Permanentmagneten 6 aus Fig. 2 vergrößert. Dabei ist zu erkennen, dass die magnetische Polarisationsachse 19, S/N, N/S des Permanentmagneten 6 in einer Längsrichtung des Faserelements 8 bzw. des Faser-Bragg-Gitters ausgerichtet ist. So ist sichergestellt, dass die mechanische Veränderung des Permanentmagneten 6 bedingt durch das hier vorbeifahrende Rad 4 von dem Bragg-Spiegel 9 erfasst werden können. Dabei scheint eine Anordnung der Längsrichtung des Faserelements 8 in einem Winkel von ±45° zur magnetischen Polarisationsachse 19 des Permanentmagneten 6 praktikabel zu sein.

Figuren 6 und 7 zeigen unterschiedliche Anordnungen des Permanentmagneten 6 relativ zur Fahrschiene 2. Bei der Ausrichtung in Fig. 6 wird der Permanentmagnet 6 durch das Rad 4 in maximaler Weise gestaucht. Bei der Anordnung in Fig. 7 dagegen wird durch das Rad 4 so gut wie keine Kompression des Permanentmagneten 6 erreicht. Die Anordnung in Fig. 7 ist demnach besonders nachteilig, weil hierdurch das Rad 4 besonders schlecht detektiert werden kann. Dagegen ist die Anordnung in Fig. 6 vorteilhaft, weil eine maximale mechanische Veränderung des Permanentmagneten 6 durch das Rad 4 stattfindet und so eine besonders gute Detektierung gegeben ist.

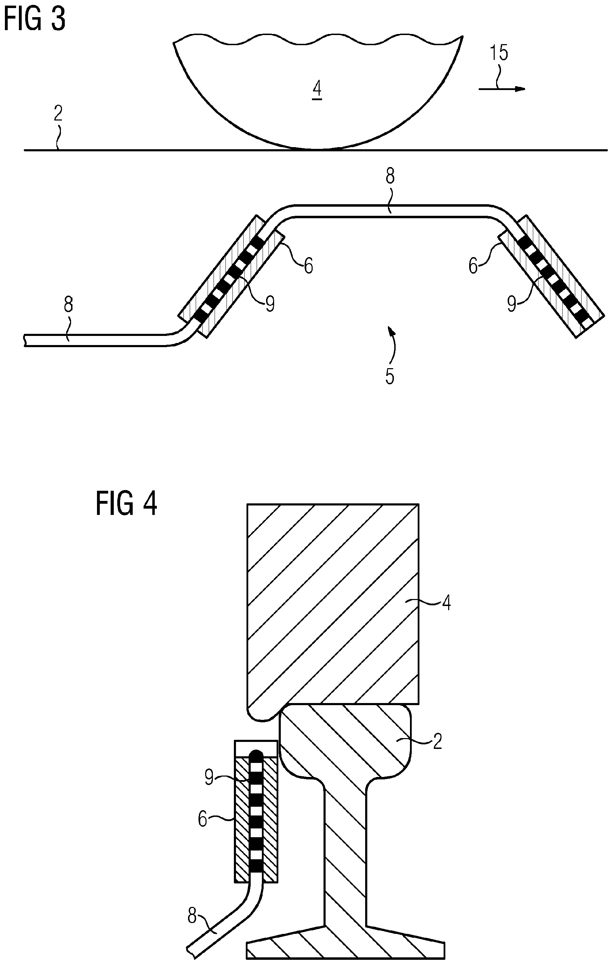

Fig. 3 zeigt eine alternative Ausführungsform der erfindungsgemäßen Einrichtung 5. Der Einfachheit halber wird lediglich auf die Unterschiede zu der Ausführungsform der Figuren 1 und 2 eingegangen. Die Ausführungsform in Fig. 3 weist zwei Permanentmagneten 6 auf. Auf jedem Permanentmagneten 6 ist ein Bragg-Spiegel 9 angeordnet, der jeweils in das gleiche Faserelement 8 integriert ist. Durch die Anordnung von zwei Permanentmagneten 6 und der Erfassung deren mechanischer Veränderung durch die Bragg-Spiegel 9 ist eine Detektion der Fahrtrichtung des Schienenfahrzeugs 3 möglich. Durch das vorbeifahrende Rad 4 in der Fahrtrichtung 15 wird zunächst der auf der linken Seite angeordnete Permanentmagnet 6 und anschließend der auf der rechten Seite angeordnete Permanentmagnet 6 mechanisch verändert. Diese zeitlich hintereinander liegende Veränderung der beiden Permanentmagneten 6 ist in dem Messignal 15 ablesbar, so dass eine Fahrtrichtungsermittlung möglich ist. Bei bekannten Achszähleinrichtungen wird die Fahrtrichtungsermittlung in vergleichbarer Weise durch zwei hintereinander angeordnete Sensoren durchgeführt.

Fig. 4 zeigt eine Seitenansicht der Anordnung in Fig. 2. Dabei ist erkennbar, dass der Permanentmagnet 6 zwar im Bereich der Fahrschiene 2 angeordnet ist, damit das Rad 4 bei Überfahrt ins Magnetfeld gerät. Jedoch ist der Permanentmagnet 6 von der Fahrschiene 2 mechanisch entkoppelt oder getrennt angeordnet. Es wird deutlich, dass erfindungsgemäß keine durch das Gewicht des Schienenfahrzeugs 6 bedingte mechanische Verformung der Fahrschiene 2 gemessen wird, sondern ausschließlich die durch das ins Magnetfeld eingetretene Rad 4 bedingte mechanische Verformung des Permanentmagneten 6.

Durch die erfindungsgemäße Verwendung von Faserelementen 8 mit Bragg-Spiegel 9 und Permanentmagneten 6 ist keine elektrische Energie im Bereich der Fahrschiene 2 nötig. Dies ist vorteilhaft, weil somit keine Kupferkabel zur Weiterleitung von elektrischer Energie oder von elektrischen Signalen nötig sind. Weiterhin kommen die bekannten Vorteile von Faserelementen 8 zum Tragen, die beispielsweise elektromagnetisch unempfindlich sind.

## Patentansprüche

1. Einrichtung zum Detektieren eines sich entlang einer Fahrschiene (2) bewegenden Rades (4),
mit wenigstens einem Permanentmagneten (6), der so im Bereich der Fahrschiene (2) anbringbar ist, dass sich der Permanentmagnet (6) durch die Vorbeibewegung des Rades (4) mechanisch verformt, und
mit wenigstens einer Sensoreinrichtung (7), die zum Ermitteln der mechanischen Verformung des Permanentmagneten (6) ausgebildet ist.

2. Einrichtung (5) nach Anspruch 1,
**dadurch gekennzeichnet, dass** die Sensoreinrichtung (7) wenigstens einen Bragg-Spiegel (9) oder wenigstens ein Faser-Bragg-Gitter umfasst.

3. Einrichtung (5) nach Anspruch 2,
**dadurch gekennzeichnet, dass** die Sensoreinrichtung (7) wenigstens ein zur Leitung von Licht geeignetes Faserelement (8) umfasst, das mit dem Bragg-Spiegel (9) oder Faser-Bragg-Gitter verbunden ist.

4. Einrichtung (5) nach einem der oben genannten Ansprüche,
**dadurch gekennzeichnet, dass** die Sensoreinrichtung (7) mit dem Permanentmagnet (6) stoffschlüssig verbunden, insbesondere verklebt, ist.

5. Einrichtung (5) nach einem der oben genannten Ansprüche,
**dadurch gekennzeichnet, dass** der Permanentmagnet (6) eine durch das vorbeifahrende Rad (4) bedingte Dilatation aufweist, die größer als eine Messunsicherheit der Sensoreinrichtung ist.

6. Einrichtung (5) nach einem der oben genannten Ansprüche,
**dadurch gekennzeichnet, dass** die Sensoreinrichtung (7) relativ zum Permanentmagneten (6) anhand der magnetischen Polarisationsachse (19) des Permanentmagneten (6) ausgerichtet ist.

7. Einrichtung (5) nach einem der oben genannten Ansprüche,
**dadurch gekennzeichnet, dass** die Sensoreinrichtung (7) wenigstens einen Tiefpassfilter (12) aufweist.

8. Einrichtung (5) nach einem der oben genannten Ansprüche,
**dadurch gekennzeichnet, dass** die Sensoreinrichtung (7) zur Ausgabe oder Veränderung wenigstens eines Radsignals (18) ausgebildet ist.

9. Eisenbahntechnische Anlage (1) mit wenigstens einer Fahrschiene (2) und wenigstens einem Schienenfahrzeug (3), dessen Räder sich während der Fahrt entlang der Fahrschiene (2) bewegen,
**dadurch gekennzeichnet, dass** die eisenbahntechnische Anlage (1) wenigstens eine Einrichtung zum Detektieren eines sich entlang einer Fahrschiene (2) bewegenden Rades (4) nach einem der oben genannten Ansprüche umfasst.

10. Eisenbahntechnische Anlage (1) nach Anspruch 9,
**dadurch gekennzeichnet, dass** die Einrichtung (5) anhand einer magnetischen Polarisationsachse (19) des Permanentmagneten (6) zur Fahrschiene (2) ausgerichtet ist.

11. Verfahren zum Detektieren eines sich entlang einer Fahrschiene (2) bewegenden Rades (4),
bei dem eine durch die Vorbeibewegung des Rades (2) hervorgerufene mechanische Verformung wenigstens eines im Bereich der Fahrschiene (2) angebrachten Permanentmagneten (6) ermittelt wird.

12. Verfahren nach Anspruch 11,
**dadurch gekennzeichnet, dass** die mechanische Verformung des Permanentmagneten (6) mittels eines Bragg-Spiegels (9) oder Faser-Bragg-Gitters ermittelt wird.

13. Verfahren nach Anspruch 11 oder 12,
**dadurch gekennzeichnet, dass** die mechanische Verformung des Permanentmagneten (6) auf eine verbundene Sensoreinrichtung (7) übertragen wird.

14. Verfahren nach einem der Ansprüche 11 bis 13,
**dadurch gekennzeichnet, dass** die mechanische Verformung des Permanentmagneten (6) durch eine Veränderung eines Lichtsignals in einem Faserelement (8) registriert wird.

15. Verfahren nach einem der Ansprüche 11 bis 14,
**dadurch gekennzeichnet, dass** durch die ermittelte Verformung des Permanentmagneten (6) bedingt wenigstens ein Radsignal (18) ausgegeben oder verändert wird.

## Claims

1. Device for detecting a wheel (4) moving along a rail (2),
with at least one permanent magnet (6) which can be attached in the region of the rail (2) such that the permanent magnet (6) is mechanically deformed by the passing movement of the wheel (4), and
with at least one sensor device (7) which is embodied to ascertain the mechanical deformation to the permanent magnet (6) .

2. Device (5) according to claim 1,
**characterised in that**
the sensor device (7) comprises at least one Bragg mirror (9) or at least one fiber Bragg grating.

3. Device (5) according to claim 2,
**characterised in that**
the sensor device (7) comprises at least one fibre element (8) suitable for conducting light, which is connected to the Bragg mirror (9) or the fiber Bragg grating.

4. Device (5) according to one of the claims mentioned above,
**characterised in that**
the sensor device (7) is connected with a material fit, in particular adhesively bonded, to the permanent magnet (6).

5. Device (5) according to one of the claims mentioned above,
**characterised in that**
the permanent magnet (6) has a dilatation, caused by the passing wheel (4), which is greater than a measurement uncertainty of the sensor device.

6. Device (5) according to one of the claims mentioned above,
**characterised in that**
the sensor device (7) is aligned relative to the permanent magnet (6) using the magnetic polarisation axis (19) of the permanent magnet (6).

7. Device (5) according to one of the claims mentioned above,
**characterised in that**
the sensor device (7) has at least one low-pass filter (12).

8. Device (5) according to one of the claims mentioned above,
**characterised in that**
the sensor device (7) is embodied to output or change at least one wheel signal (18).

9. Railway system (1) with at least one rail (2) and at least one rail vehicle (3), the wheels of which move along the rail (2) during the journey,
**characterised in that**
the railway system (1) comprises at last one device for detecting a wheel (4) moving along a rail (2) according to one of the claims mentioned above.

10. Railway system (1) according to claim 9,
**characterised in that**
the device (5) is aligned relative to the rail (2) using a magnetic polarisation axis (19) of the permanent magnet (6).

11. Method for detecting a wheel (4) moving along a rail (2), in which a mechanical deformation in at least one permanent magnet (6) attached in the region of the rail (2), which deformation is brought about by the passing movement of the wheel (2), is ascertained.

12. Method according to claim 11,
**characterised in that**
the mechanical deformation in the permanent magnet (6) is ascertained by means of a Bragg mirror (9) or fiber Bragg grating.

13. Method according to claim 11 or 12,
**characterised in that**
the mechanical deformation in the permanent magnet (6) is transmitted to a connected sensor device (7).

14. Method according to one of claims 11 to 13,
**characterised in that**
the mechanical deformation in the permanent magnet (6) is registered by a change in a light signal in a fibre element (8) .

15. Method according to one of claims 11 to 14,
**characterised in that**
at least one wheel signal (18) can be output or changed as a function of the ascertained deformation in the permanent magnet (6).

## Revendications

1. Dispositif pour détecter une roue (4) qui se déplace le long d'un rail (2),
comportant au moins un aimant (6) permanent qui peut être placé dans la zone du rail (2) de manière à ce que l'aimant (6) permanent se déforme mécaniquement par le passage de la roue (4), et
comportant au moins un dispositif (7) de capteur, qui est configuré pour déterminer la déformation mécanique de l'aimant (6) permanent.

2. Dispositif (5) suivant la revendication 1,
**caractérisé en ce que**
le dispositif (7) de capteur comporte au moins un réseau (9) de Bragg ou au moins une fibre à réseau de Bragg.

3. Dispositif (5) suivant la revendication 2,
**caractérisé en ce que**
le dispositif (7) de capteur comporte au moins un élément (8) à fibre apte à conduire la lumière, qui est relié au réseau (9) de Bragg ou à la fibre à réseau de Bragg.

4. Dispositif (5) suivant l'une des revendications précédentes, **caractérisé en ce que**
le dispositif (7) de détection est relié à coopération de matière à l'aimant (6) permanent, notamment collé.

5. Dispositif (5) suivant l'une des revendications précédentes, **caractérisé en ce que**
l'aimant (6) permanent présente une dilatation due au passage de la roue (4), qui est plus grande que l'incertitude de mesure du dispositif de capteur.

6. Dispositif (5) suivant l'une des revendications précédentes, **caractérisé en ce que**
le dispositif (7) de capteur est orienté par rapport à l'aimant (6) permanent à l'aide de l'axe (19) de polarisation magnétique de l'aimant (6) permanent.

7. Dispositif (5) suivant l'une des revendications précédentes, **caractérisé en ce que**
le dispositif (7) de capteur comporte au moins un filtre (12) passe-bas.

8. Dispositif (5) suivant l'une des revendications précédentes, **caractérisé en ce que**
le dispositif (7) de capteur est configuré pour donner ou modifier au moins un signal (18) de roue.

9. Installation (1) ferroviaire ayant au moins un rail (2) et au moins un véhicule (3) ferroviaire, dont les roues se déplacent le long du rail (2) pendant la circulation,
**caractérisée en ce que**
l'installation (1) ferroviaire comporte au moins un dispositif pour détecter une roue (4) qui se déplace le long d'un rail (2) suivant l'une des revendications précédentes.

10. Installation (1) ferroviaire suivant la revendication 9, **caractérisée en ce que**
le dispositif (5) est orienté vers le rail (2) à l'aide d'un axe (19) de polarisation magnétique de l'aimant (6) permanent.

11. Procédé pour détecter une roue (4) qui se déplace le long d'un rail (2),
dans lequel on détermine une déformation mécanique, provoquée par le passage de la roue (4), d'au moins un aimant (6) permanent placé dans la zone du rail (2).

12. Procédé suivant la revendication 11,
**caractérisé en ce que** l'on détermine la déformation mécanique de l'aimant (6) permanent au moyen d'un réseau (9) de Bragg ou d'une fibre à réseau de Bragg.

13. Procédé suivant la revendication 11 ou 12,
**caractérisé en ce que**
l'on transmet la déformation mécanique de l'aimant (6) permanent à un dispositif (7) de capteur connecté.

14. Procédé suivant l'une des revendications 11 à 13, **caractérisé en ce que**
l'on enregistre la déformation mécanique de l'aimant (6) permanent par une modification d'un signal lumineux dans un élément (8) à fibres.

15. Procédé suivant l'une des revendications 11 à 14, **caractérisé en ce que**
l'on donne ou modifie au moins un signal (18) de roue dû à la déformation déterminée de l'aimant (6) permanent.
